# EUROPÄISCHE PATENTSCHRIFT

(11) **EP 3 167 089 B1**
(45) Veröffentlichungstag und Bekanntmachung des Hinweises auf die Patenterteilung: **06.12.2017**
(21) Anmeldenummer: 15738030.4
(22) Anmeldetag: 09.07.2015
(51) Int. Cl.: C22C 21/00

(54) **VERWENDUNG EINER ALUMINIUMLEGIERUNG BZW. EINES ALUMINIUMFLACHPRODUKTS AUS EINER SOLCHEN LEGIERUNG FÜR EIN ALUMINIUM-KUNSTSTOFF-VERBUNDBAUTEIL**
THE USE OF AN ALUMINIUM ALLOY, IN PARTICULAR AN ALUMINIUM FLAT PRODUCT OF THIS ALLOY FOR AN ALUMINUM-POLYMER COMPOSITE
L'UTILISATION D'UN ALLIAGE D'ALUMINIUM, EN PARTICULIER UN ALUMINIUM PRODUIT PLAT DE CET ALLIAGE POUR UN ALUMINIUM-POLYMÈRE COMPOSITE

(30) Priorität: 09.07.2014 EP 14176390
(43) Veröffentlichungstag der Anmeldung: 17.05.2017
(73) Patentinhaber: Hydro Aluminium Rolled Products GmbH, 41515 Grevenbroich (DE)
(72) Erfinder: DENKMANN, Volker, 47906 Kempen (DE); SIEMEN, Andreas, 41363 Jüchen (DE)
(74) Vertreter: Cohausz & Florack
(86) Internationale Anmeldenummer: PCT/EP2015/065670
(87) Internationale Veröffentlichungsnummer: WO 2016/005484

(56) Entgegenhaltungen:
- EP-A1- 0 486 427
- EP-A1- 1 074 636

## Beschreibung

Die Erfindung betrifft die Verwendung einer Aluminiumlegierung für ein Aluminium-Kunststoff-Verbundbauteil. Weiterhin betrifft die Erfindung die Verwendung eines Aluminiumflachprodukts aus einer solchen Legierung für ein Aluminium-Kunststoff-Verbundbauteil. Weiterhin betrifft die Erfindung eine solche Legierung sowie ein Aluminiumflachprodukt aus einer solchen Legierung.

Aluminium-Kunststoff-Verbundbauteile können insbesondere im Automobilbereich als Leichtbauelemente eingesetzt werden, beispielsweise um schwerere Stahlmodule zu ersetzen.

Im Automobilbereich, insbesondere für Automobilunterbodenanwendungen werden, speziell als Deckschicht für Hitzeschilder, Aluminiumfolien aus möglichst reinen Legierungen, zum Beispiel vom Typ AA1050, verwendet, die mit einer Kunststofffolie als Haftvermittler kaschiert sind. Die Aluminiumfolien werden in der Regel kalottiert und/oder perforiert eingesetzt.

Bei neueren Verbundbauteilen werden Aluminiumfolien zudem verwendet, um bestimmte Funktionalitäten des Verbundbauteils wie beispielsweise hinsichtlich der Steifigkeit oder der akustischen Dämmeigenschaften zu erreichen.

Während im Automobilbereich zunächst im Wesentlichen flache Aluminium-Kunststoff-Verbundbauteile Verwendung fanden, geht die Entwicklung dahin, Aluminium-Kunststoff-Verbundbauteile mit zunehmend komplexeren Geometrien herzustellen. Die Herstellung derartiger Aluminium-Kunststoff-Verbundbauteile erfordert daher Umformschritte mit zum Teil hohen Umformgraden.

Es hat sich herausgestellt, dass die bisher eingesetzten Aluminiumlegierungen für derartig hohe Umformgrade nur bedingt geeignet sind, so dass die erreichbaren Bauteilgeometrien beschränkt sind.

Hiervon ausgehend liegt der vorliegenden Erfindung die Aufgabe zu Grunde, eine Aluminiumlegierung bzw. ein Aluminiumflachprodukt aus einer solchen Aluminiumlegierung für Aluminium-Kunststoff-Verbundbauteile bzw. deren Herstellung zur Verfügung zu stellen, mit denen auch komplexe Bauteilgeometrien mit vorteilhaften mechanischen Eigenschaften erreichbar sind.

Diese Aufgabe wird erfindungsgemäß gelöst durch eine Aluminiumlegierung, wobei die Aluminiumlegierung folgende Zusammensetzung aufweist:

| | |
|---|---|
| Si: | 0,05 - 0,35 Gew.-%, |
| Fe: | 1,3 - 1,75 Gew.-%, vorzugsweise 1,3 - 1,7 Gew.-%, insbesondere 1,6 - 1,7 Gew.-%, |
| Cu: | ≤ 0,02 Gew.-%, vorzugsweise ≤ 0,01 Gew.-%, |
| Mn: | 0,015 - 0,035 Gew.-%, vorzugsweise 0,025 - 0,034 Gew.-%, |
| Mg: | ≤ 0,003 Gew.-%, vorzugsweise ≤ 0,001 Gew.-%, |
| Cr: | ≤ 0,03 Gew.-%, vorzugsweise ≤ 0,02 Gew.-%, |
| Ni: | ≤ 0,02 Gew.-%, |
| Zn: | ≤ 0,03 Gew.-%, |
| Ti: | ≤ 0,03 Gew.-%, |

Verunreinigungen einzeln bis 0,05 Gew.-%, vorzugsweise bis 0,02 Gew.-%, in Summe bis 0,15 Gew.-%, vorzugsweise bis 0,06 Gew.-%,
   Rest Aluminium.

Weiterhin wird die Aufgabe erfindungsgemäß gelöst durch ein Aluminiumflachprodukt aus einer solchen Legierung.

Weiterhin wird diese Aufgabe erfindungsgemäß gelöst durch die Verwendung einer Aluminiumlegierung für ein Aluminium-Kunststoff-Verbundbauteil bzw. zu dessen Herstellung, wobei die Aluminiumlegierung folgende Zusammensetzung aufweist:

| | |
|---|---|
| Si: | 0,05 - 0,35 Gew.-%, |
| Fe: | 1,3 - 1,75 Gew.-%, vorzugsweise 1,3 - 1,7 Gew.-%, insbesondere 1,6 - 1,7 Gew.-%, |
| Cu: | ≤ 0,02 Gew.-%, vorzugsweise ≤ 0,01 Gew.-%, |
| Mn: | 0,015 - 0,035 Gew.-%, vorzugsweise 0,025 - 0,034 Gew.-%, |
| Mg: | ≤ 0,003 Gew.-%, vorzugsweise ≤ 0,001 Gew.-% |
| Cr: | ≤ 0,03 Gew.-%, vorzugsweise ≤ 0,02 Gew.-%, |
| Ni: | ≤ 0,02 Gew.-%, |
| Zn: | ≤ 0,03 Gew.-%, |
| Ti: | ≤ 0,03 Gew.-%, |

Verunreinigungen einzeln bis 0,05 Gew.-%, vorzugsweise bis 0,02 Gew.-%, in Summe bis 0,15 Gew.-%, vorzugsweise bis 0,06 Gew.-%,
   Rest Aluminium.

Es hat sich überraschenderweise herausgestellt, dass durch den hohen Fe-Gehalt bei entsprechend gewählten Si-Gehalten und minimiertem Mg-Gehalt eine sehr gut umformbare Legierung erzielt wird, die besonders für Aluminium-Kunststoff-Verbundbauteile bzw. deren Herstellung geeignet ist. Insbesondere weist die zuvor beschriebene Legierung eine höhere Bruchdehnung A100 auf als die üblicherweise im Kraftfahrzeugbau verwendeten Legierungen EN AW-1050-A bzw. EN-AW 1200 und ist daher besser umformbar. Gleichzeitig weist die zuvor beschriebene Legierung eine gute Korrosionsbeständigkeit auf und ist gut prozessierbar.

Die hohe Bruchdehnung und damit die gute Umformbarkeit der Legierung wird insbesondere durch den recht hohen Fe-Gehalt im Bereich von 1,3 bis 1,75 Gew-%, vorzugsweise von 1,6 bis 1,7 Gew.-%, erreicht, wobei mit einer bevorzugten Fe-Obergrenze von 1,7 Gew.-% ein besseres Gefüge erreicht werden kann. Durch den geforderten Si-Gehalt im Bereich von 0,05 bis 0,35 Gew.-% wird gleichzeitig ein gutes Korrosionsverhalten erzielt. Durch den Mn-Anteil kann eine größere Festigkeit der Legierung erreicht werden, allerdings auf Kosten der Prozessierbarkeit, da höhere Mn-Gehalte bei der Legierung zu einer stärkeren Entfestigung bei Temperaturanstieg führen, d.h. zu einer steileren Entfestigungskurve als Funktion der Temperatur, so dass eine gezielte Wärmebehandlung der Legierung schwierig wird. Mit dem beanspruchten Mn-Gehalt im Bereich von 0,015 bis 0,035 Gew.-%, vorzugsweise von 0,025 bis 0,034 Gew.-%, kann hier ein guter Kompromiss erreicht werden.

Weiterhin wird die oben genannte Aufgabe erfindungsgemäß gelöst durch die Verwendung eines Aluminiumflachprodukts aus der zuvor beschriebenen Legierung für ein Aluminium-Kunststoff-Verbundbauteil bzw. zu dessen Herstellung.

Auf diese Weise wird ein extrem verformbares Aluminiumflachprodukt bereitgestellt, das sehr gute Umformeigenschaften aufweist und damit bei Herstellung des Verbundbauteils beispielsweise zusammen mit Kunststofflagen umgeformt werden kann. Insbesondere ist es möglich, das Verbundbauteil bzw. Vorformen dieses Verbundbauteils während der Herstellung als Ganzes umzuformen.

Die zuvor beschriebene Legierung bzw. das Aluminiumflachprodukt aus einer solchen Legierung werden daher bevorzugt für Herstellungsverfahren von Aluminium-Kunststoff-Verbundbauteilen eingesetzt, die mindestens einen Umformschritt aufweisen, insbesondere einen Umformschritt, der eine Bruchdehnung A100 des Aluminiumflachprodukts von mehr als 30 % erfordert.

Unter einem Aluminium-Kunststoff-Verbundbauteil wird vorliegend ein Verbundbauteil verstanden, das mindestens ein Aluminiumelement wie zum Beispiel eine Aluminiumlage und mindestens ein Kunststoff-haltiges Element wie zum Beispiel eine Kunststoff-haltige Lage umfasst.

Das Kunststoff-haltige Element, insbesondere die Kunststoff-haltige Lage, weist vorzugsweise einen thermoplastischen Kunststoff als Bindemittel auf. Neben dem Kunststoff kann das Kunststoff-haltige Element bzw. die Kunststoff-haltige Lage auch weitere Zusätze wie zum Beispiel anorganische Füllstoffe oder Fasern aufweisen.

Im Folgenden werden weitere Ausführungsformen der zuvor genannten Legierung, des Aluminiumflachprodukts sowie der zuvor genannten Verwendungen beschrieben, wobei die einzelnen Ausführungsformen untereinander beliebig kombinierbar und unabhängig voneinander jeweils sowohl auf die Legierung, das Aluminiumflachprodukt, als auch auf die Verwendungen der Legierung bzw. des Aluminiumflachprodukts anwendbar sind.

Bei einer Ausführungsform weist die Aluminiumlegierung einen Fe-Gehalt von 1,4 - 1,7 Gew.-%, vorzugsweise 1,6 - 1,7 Gew.-%, auf. Es hat sich herausgestellt, dass mit einem solchen Fe-Gehalt besonders gute Umformeigenschaften erreicht werden. Bei einer alternativen Ausführungsform, die insbesondere für weniger komplex geformte Bauteile geeignet ist, kann die Aluminiumlegierung zu Gunsten einer höheren Festigkeit, wenngleich auf Kosten der Umformbarkeit, auch einen Fe-Gehalt von maximal 1,6 Gew.-% aufweisen, insbesondere einen Fe-Gehalt im Bereich von 1,4 Gew.-% bis 1,6 Gew.-%.

Bei einer weiteren Ausführungsform weist die Aluminiumlegierung einen Si-Gehalt von 0,15 - 0,35 Gew.-% auf. Mit einem solchen Si-Gehalt kann neben den Umformeigenschaften das Korrosionsverhalten der Legierung verbessert werden.

Bei einer weiteren Ausführungsform handelt es sich bei dem Aluminiumflachprodukt um ein Aluminiumband, um eine Aluminiumfolie oder um ein Aluminiumblech. Derartige Produkte sind besonders für die Herstellung mehrlagiger Aluminium-Kunststoff-Verbundbauteile geeignet, die eine oder mehrere Aluminiumlagen aufweisen.

Bei einer weiteren Ausführungsform weist das Aluminiumflachprodukt eine Dicke im Bereich von 0,02 mm bis 0,7 mm, vorzugsweise im Bereich von 0,020 mm bis 0,200 mm, insbesondere im Bereich von 0,020 mm bis 0,140 mm auf. Dieser Dickenbereich verleiht einem entsprechenden Aluminium-Kunststoff-Verbundbauteil gute Steifigkeitseigenschaften, insbesondere Biege- und Torsionssteifigkeit, bei gleichzeitiger Gewichts- und Materialkostenoptimierung.

Bei einer weiteren Ausführungsform weist das Aluminiumflachprodukt folgende mechanische Eigenschaften auf, gemessen im weichen Zustand 0 nach EN 546-2:

| | |
|---|---|
| Zugfestigkeit Rm: | > 95 MPa, vorzugsweise > 100 MPa, |
| Dehngrenze Rp0,2: | > 45 MPa und |
| Bruchdehnung A100: | > 25% bei einer Dicke des Probenkörpers von 45 µm und/oder |
| | > 30 %, vorzugsweise > 35 %, bei einer Dicke des Probenkörpers von 100 µm. |

Die Zugfestigkeit Rm, die Dehngrenze Rp0,2 und die Bruchdehnung A100 werden nach DIN EN ISO 6892-1:2009 bestimmt.

Es hat sich herausgestellt, dass mit der zuvor beschriebenen Legierung die oben genannten mechanischen Eigenschaften erreicht werden können, die insbesondere eine gute Umformbarkeit von Aluminiumflachprodukten aus dieser Legierung bedingen. Derartige Aluminiumflachprodukte können daher besonders in Herstellungsverfahren von Aluminium-Kunststoff-Verbundbauteilen verwendet werden, die Umformungen mit hohen Umformgraden umfassen, so dass auf diese Weise Aluminium-Kunststoff-Verbundbauteile mit komplexen Geometrien herstellbar sind.

Bei einer weiteren Ausführungsform liegt das Verhältnis des Fe-Gehalts zum Si-Gehalt der Aluminiumlegierung zwischen 4 und 10, insbesondere zwischen 4 und 8. Vorzugsweise liegt das Fe:Si-Verhältnis bei mindestens 7. Das Verhältnis wird aus den jeweiligen Gehalten in Gew.-% berechnet. Durch ein Fe:Si-Verhältnis in diesem Bereich werden die Korrosionseigenschaften positiv beeinflusst, ohne dass die Umformeigenschaften zu stark beeinträchtigt werden. Bei Fe:Si-Verhältnissen kleiner 7 und erst recht kleiner 4 werden die gewünschten Umformeigenschaften nicht mehr erreicht. Bei Fe:Si-Verhältnissen größer 8 und insbesondere größer 10 kann es hingegen zu erhöhter Korrosionsneigung kommen.

Bei einer weiteren Ausführungsform liegt das Verhältnis des Fe-Gehalts zum Mn-Gehalt der Aluminiumlegierung zwischen 40 und 80, insbesondere zwischen 50 und 80. Vorzugsweise beträgt das Fe:Mn-Verhältnis höchstens 60. Das Verhältnis wird aus den jeweiligen Gehalten in Gew.-% berechnet. Durch ein Fe:Mn-Verhältnis in diesem Bereich wird eine Legierung ausreichender Festigkeit (Rm) erzielt, die gleichzeitig gut prozessierbar ist. Bei Fe:Mn-Verhältnissen kleiner 50 und insbesondere kleiner 40 ergibt sich ein starker Steilabfall der Entfestigungskurve der Legierung, so dass eine definierte Wärmebehandlung zur Erzielung bestimmter Festigkeiten erschwert wird.

Versuche haben gezeigt, dass sich mit den zuvor beschriebenen, bevorzugten Verhältnissen des Fe-Gehalts zum Si-Gehalt und des Fe-Gehalts zum Mn-Gehalt sowie durch die Begrenzung des Mg-Gehalts auf 0,003 Gew.-%, vorzugsweise auf 0,001 Gew.-%, die vorteilhaften mechanischen Eigenschaften (Rm > 95 MPa, insb. > 100 MPa, Rp0,2 > 45 MPa, A100 > 30%, insbesondere > 35%, bei 100 µm Dicke und/oder > 25% bei 45 µm Dicke) des Aluminiumflachprodukts zuverlässig erreichen lassen.

Bei einer weiteren Ausführungsform weist das Aluminiumflachprodukt eine Dehngrenze Rp0,2 zwischen 45 und 90 MPa auf. Es hat sich gezeigt, dass sich die Dehngrenze des Aluminiumflachprodukts durch entsprechende Wärmebehandlung auf einen solchen vorteilhaften Wert einstellen lässt, und zwar insbesondere bei nahezu unveränderter Zugfestigkeit und Bruchdehnung. Eine Dehngrenze in diesem Bereich konnte bei der beschriebenen Legierung zum Beispiel durch eine Wärmebehandlung bei einer Temperatur im Bereich von 195 °C bis 260 °C, insbesondere 195 °C bis 240 °C, mit einer Haltezeit von 2 h, insbesondere mindestens 5 h, erreicht werden.

Bei einer weiteren Ausführungsform ist das Aluminiumflachprodukt ein- oder beidseitig mit einer Haftlackschicht beschichtet, vorzugsweise mit einem PP-Haftlack auf Epoxidharzbasis. Die Haftlackschicht lässt sich beispielsweise sehr rationell durch ein Coil-Coating-Verfahren auf das Aluminiumflachprodukt aufbringen. Alternativ kann die Haftlackschicht auch durch Spritzen und Tauchen aufgebracht werden. Eine solche Haftlackschicht ermöglicht eine bessere Haftung des Aluminiumflachprodukts am Kunststoff des Aluminium-Kunststoff-Verbundbauteils, insbesondere an Kunststoff-haltigen Lagen. Weiterhin wird die Aluminiumoberfläche durch den Haftlack vor Korrosion geschützt, so dass hierdurch ein synergetischer Effekt erreicht wird, bei dem gleichzeitig der Verbund des Verbundbauteils gestärkt und zudem dessen Korrosionseigenschaften verbessert werden.

Vorzugsweise wird für die Haftlackschicht ein Lack verwendet, der durch Wärme, beispielsweise durch Temperaturen von mehr als 160 °C, aktiviert wird. Unter einer Aktivierung des Lacks wird verstanden, dass der Lack in einen Zustand überführt wird, in dem er sich mit anderen Materialien, beispielsweise einer Kunststoffschicht des herzustellenden Aluminium-Kunststoff-Verbundbauteils, verbindet und, ggf. bei nachfolgender Abkühlung, aushärtet. Insbesondere kann der Lack auf einem thermoplastischen Kunststoff basieren, der durch Wärme erweicht und ggf. vernetzt und sich so beispielsweise mit einer kunststoffhaltigen Schicht verbindet. Beispiele für derartige Lacke sind beispielsweise Lacke auf Epoxy-Basis (Epoxy-Systeme), Polyester-Basis (Polyester-Systeme) oder Acrylat-Basis (Acrylat-Systeme). Diese Lacke sind beispielsweise geeignet, um die Haftung des Aluminiumflachprodukts an einer Kunststoffschicht wie z.B. aus Acrylnitril-Butadien-Styrol (ABS), Polyvinylchlorid (PVC), Polycarbonaten (PC), Polyamiden (PA) oder Polyolefinen, insbesondere Polypropylen (PP), zu verbessern.

Aluminiumflachprodukte, wie zum Beispiel Aluminiumbleche oder -folien, die eine Haftlackschicht aus wärmeaktivierbarem Haftlack aufweisen, können in vorteilhafter Weise in einer beheizbaren Presse mit einer oder mehreren Kunststoff-haltigen Lagen zu einem Verbundbauteil verpresst werden. Während des Verpressens erwärmt die Presse die Kunststoff-haltige Lage bzw. den Haftlack vorzugsweise auf eine Temperatur oberhalb der Erweichungstemperatur bzw. oberhalb der Schmelztemperatur des verwendeten Kunststoffs. Auf diese Weise werden der Kunststoff und die Aluminiumflachprodukte über den Haftlack so miteinander verbunden, dass eine feste Verbindung der einzelnen Komponenten des Verbundbauteils untereinander und damit ein sehr stabiles Verbundbauteil erreicht werden.

Beidseitig beschichtete Aluminiumflachprodukte ermöglichen insbesondere die Herstellung eines Verbundbauteils mit mindestens einer innenliegenden Aluminiumlage. Eine solche innenliegende Aluminiumlage kann beispielsweise als Dampfbarriere dienen.

Für eine solche innenliegende Aluminiumlage ist weiterhin auch die hohe Umformbarkeit der beschriebenen Aluminiumflachprodukte vorteilhaft, da derartig angeordnete Aluminiumlagen bei einer Umformung des Verbundbauteils besonders stark beansprucht werden. Entsprechend weist das Aluminium-Kunststoff-Verbundbauteil bei einer Ausführungsform mindestens eine innenliegende Aluminiumlage auf.

Bei einer weiteren Ausführungsform weist die Haftlackschicht eine Dicke im Bereich von 3 bis 30 µm, vorzugsweise von 5 bis 10 µm, und/oder eine Grammatur im Bereich 3 bis 30 g/m², bevorzugt 5 - 10 g/m², weiter bevorzugt 6 - 9 g/m², auf. Mit diesen Dicken bzw. Grammaturen wurde eine sehr gute Haftung zwischen den Aluminiumlagen und den Kunststoff-haltigen Lagen des Verbundbauteils bei gleichzeitig geringem Verbrauch an Haftlack erreicht. Unter der Grammatur wird vorliegend das Gewicht der getrockneten Haftlackschicht bezogen auf die Fläche verstanden (Trockenflächenmasse).

Bei einer weiteren Ausführungsform handelt es sich bei dem Aluminium-Kunststoff-Verbundbauteil um ein mehrlagiges Verbundbauteil mit mindestens einer Aluminiumlage und mindestens einer Kunststoff-haltigen Lage. Das Aluminium-Kunststoff-Verbundbauteil kann beispielsweise eine Mehrzahl an Aluminiumlagen und eine Mehrzahl an Kunststoff-haltigen Lagen aufweisen, die abwechselnd in einer Stapelrichtung übereinander angeordnet sind. Die mechanischen Eigenschaften derartiger Bauteile sind in einem weiten Bereich an den jeweiligen Einsatzzweck anpassbar, insbesondere durch Auswahl der Anzahl und Anordnung der einzelnen Lagen, der Zusammensetzung und Dicke der Kunststoff-haltigen Lagen, der Dicke und der mechanischen Eigenschaften, insbesondere der Festigkeit, der Aluminiumlagen. Insbesondere können mit diesen Verbundbauteilen gute mechanische Eigenschaften bei gleichzeitig geringem Gewicht erzielt werden.

Eine besonders gute Haftung zwischen dem Aluminiumflachprodukt und dem Kunststoff im Verbundbauteil wird dadurch erreicht, dass das Aluminium-Kunststoff-Verbundbauteil Polypropylen (PP) als Kunststoff umfasst, insbesondere eine PPhaltige Lage aufweist. Bei dem Haftlack handelt es sich entsprechend vorzugsweise um einen PP-Haftlack.

Die zuvor beschriebenen mehrlagigen Verbundbauteile sind beispielsweise dadurch herstellbar, dass die einzelnen Lagen in einer Stapelrichtung übereinander angeordnet und dann zusammen in einer beheizten Presse miteinander verpresst werden. Vorzugsweise können die Lagen in den beheizten Pressen gleichzeitig in die gewünschte Zielgeometrie des Verbundbauteils umgeformt werden.

Vorzugsweise ist mindestens eine Kunststoff-haltige Lage des Aluminium-Kunststoff-Verbundbauteils eine Faser-haltige Lage. Beispielsweise kann die Kunststoff-haltige Lage Kunststoff-Fasern als Bindemittel und/oder anorganische Fasern wie zum Beispiel Glasfasern zur Verstärkung aufweisen. Derartige Lagen verleihen dem Verbundbauteil eine hohe Steifigkeit und gute akustische Dämmeigenschaften bei gleichzeitig geringer Dichte.

Im Folgenden werden weitere Ausführungsformen 1 - 14 einer Verwendung und eine weitere Ausführungsform 15 einer Aluminiumlegierung beschrieben. Die nachfolgenden Ausführungsformen sind untereinander und auch mit den zuvor beschriebenen Ausführungsformen der Verwendung bzw. der Aluminiumlegierung kombinierbar:
1. Verwendung einer Aluminiumlegierung für ein Aluminium-Kunststoff-Verbundbauteil bzw. zu dessen Herstellung, wobei die Aluminiumlegierung folgende Zusammensetzung aufweist: Si: 0,05 - 0,35 Gew.-%, Fe: 1,3 - 1,6 Gew.-%, Cu: < 0,02 Gew.-%, Mn: 0,015 - 0,035 Gew.-%, Mg: < 0,001 Gew.-%, Cr: < 0,02 Gew.-%, Ni: < 0,02 Gew.-%, Zn: < 0,03 Gew.-%, Ti: < 0,03 Gew.-%, Verunreinigungen einzeln bis 0,02 Gew.-%, in Summe bis 0,06 Gew.-%, Rest Aluminium.
2. Verwendung nach Ausführungsform 1, wobei die Aluminiumlegierung einen Fe-Gehalt von 1,4 - 1,6 Gew.-% und/oder einen Si-Gehalt von 0,15 - 0,35 Gew.-% aufweist.
3. Verwendung nach Ausführungsform 1 oder 2, wobei das Verhältnis des Fe-Gehalts zum Si-Gehalt der Aluminiumlegierung zwischen 4 und 8 liegt.
4. Verwendung nach einer der Ausführungsformen 1 bis 3, wobei das Verhältnis des Fe-Gehalts zum Mn-Gehalt der Aluminiumlegierung zwischen 40 und 80 liegt.
5. Verwendung eines Aluminiumflachprodukts aus einer Legierung entsprechend einer der Ausführungsformen 1 bis 4 für ein Aluminium-Kunststoff-Verbundbauteil bzw. zu dessen Herstellung.
6. Verwendung nach Ausführungsform 5, wobei es sich bei dem Aluminiumflachprodukt um ein Aluminiumband, um eine Aluminiumfolie oder um ein Aluminiumblech handelt.
7. Verwendung nach Ausführungsform 5 oder 6, wobei das Aluminiumflachprodukt eine Dicke im Bereich von 0,02 mm bis 0,7 mm, vorzugsweise im Bereich von 0,020 mm bis 0,200 mm aufweist.
8. Verwendung nach einer der Ausführungsformen 5 bis 7, wobei das Aluminiumflachprodukt folgende mechanische Eigenschaften aufweist, gemessen im weichen Zustand O nach EN 546-2: Zugfestigkeit Rm: > 95 MPa, vorzugsweise > 100 MPa, Dehngrenze Rp0,2: > 45 MPa und Bruchdehnung A100: > 25% bei einer Dicke des Probenkörpers von 45 µm und/oder > 30% bei einer Dicke des Probenkörpers von 100 µm.
9. Verwendung nach einer der Ausführungsformen 5 bis 8, wobei das Aluminiumflachprodukt eine Dehngrenze Rp0,2 zwischen 45 und 90 MPa aufweist.
10. Verwendung nach einer der Ausführungsformen 5 bis 9, wobei das Aluminiumflachprodukt ein- oder beidseitig mit einer Haftlackschicht beschichtet ist, vorzugsweise mit einem PP-Haftlack auf Epoxidharzbasis.
11. Verwendung nach Ausführungsform 10, wobei die Haftlackschicht eine Dicke im Bereich 3 - 30 µm, vorzugsweise 5 - 10 µm und/oder eine Grammatur im Bereich 5 - 10 g/m², vorzugsweise 6 - 9 g/m² aufweist.
12. Verwendung nach einer der Ausführungsformen 1 bis 11, wobei es sich bei dem Aluminium-Kunststoff-Verbundbauteil um ein mehrschichtiges Verbundbauteil mit mindestens einer Aluminiumlage und mindestens einer Kunststoff-haltigen Lage, insbesondere einer PP-haltigen Lage, handelt.
13. Verwendung nach Ausführungsform 12, wobei mindestens eine Kunststoff-haltige Lage des Aluminium-Kunststoff-Verbundbauteils eine Faser-haltige Lage ist.
14. Verwendung nach Ausführungsform 12 oder 13, wobei das Aluminium-Kunststoff-Verbundbauteil mindestens eine innenliegende Aluminiumlage aufweist.
15. Aluminiumlegierung, insbesondere für ein Aluminium-Kunststoff-Verbundbauteil bzw. zu dessen Herstellung, wobei die Aluminiumlegierung folgende Zusammensetzung aufweist: Si: 0,05 - 0,35 Gew.-%, Fe: 1,3 - 1,6 Gew.-%, Cu: < 0,02 Gew.-%, Mn: 0,015 - 0,035 Gew.-%, Mg: < 0,001 Gew.-%, Cr: < 0,02 Gew.-%, Ni: < 0,02 Gew.-%, Zn: < 0,03 Gew.-%, Ti: < 0,03 Gew.-%, Verunreinigungen einzeln bis 0,02 Gew.-%, in Summe bis 0,06 Gew.-%, Rest Aluminium.

Im Rahmen der Erfindung wurden Versuche durchgeführt, die die Eigenschaften der zuvor beschriebenen Legierung bzw. der entsprechenden Aluminiumflachprodukte demonstrieren.

Für die Versuche wurden aus den in der folgenden Tabelle 1 angegebenen Legierungen 1 - 11 Barren gegossen und homogenisiert. Die Barren wurden zunächst zu Warmbändern mit Dicken im Bereich von 4 - 5 mm warmgewalzt und dann zu Kaltbändern mit Enddicken im Bereich von 30 - 140 µm kaltgewalzt. Bei der Legierung 11 handelt es sich um eine Vergleichslegierung. Als zusätzliche Vergleichsversuche wurden in entsprechender Weise Bänder aus den bisher im Kraftfahrzeugbau eingesetzten Legierungen AA8079-D, AA8079-L, AA1200 und AA1050A hergestellt.

**Tabelle 1 (alle Angaben in Gew.-%)**

| **Nr.** | **Si** | **Fe** | **Cu** | **Mn** | **Mg** | **Cr** | **Ni** | **Zn** | **Ti** | **Al** |
|---|---|---|---|---|---|---|---|---|---|---|
| 1 | 0,05 | 1,53 | - | 0,021 | 0,0006 | - | - | 0,01 | 0,02 | Rest |
| 2 | 0,06 | 1,55 | - | 0,018 | 0,0006 | - | - | 0,01 | 0,02 | Rest |
| 3 | 0,07 | 1,52 | - | 0,019 | 0,0007 | - | - | 0,01 | 0,02 | Rest |
| 4 | 0,11 | 1,61 | 0,01 | 0,035 | 0,0004 | - | - | 0,01 | 0,02 | Rest |
| 5 | 0,12 | 1,64 | 0,02 | 0,024 | 0,0007 | - | - | 0,01 | 0,02 | Rest |
| 6 | 0,12 | 1,68 | 0,01 | 0,027 | 0,0002 | - | - | 0,01 | 0,02 | Rest |
| 7 | 0,06 | 1,65 | 0,01 | 0,026 | 0,0004 | 0,01 | - | 0,02 | 0,02 | Rest |
| 8 | 0,06 | 1,75 | 0,01 | 0,027 | 0,0006 | 0,02 | - | 0,02 | 0,02 | Rest |
| 9 | 0,18 | 1,64 | 0,01 | 0,027 | 0,0006 | 0,02 | - | 0,02 | 0,02 | Rest |
| 10 | 0,18 | 1,63 | 0,01 | 0,03 | 0,0008 | 0,02 | - | 0,02 | 0,02 | Rest |
| 11 | 0,19 | 1,62 | 0,01 | 0,04 | 0,0007 | 0,03 | - | 0,02 | 0,03 | Rest |

Für die Kaltbänder wurden die Zugfestigkeit Rm, die Dehngrenze Rp0,2 und die Bruchdehnung (A50 für Dicken ≥ 100 µm bzw. A100 für Dicken ≤ 100 µm) gemessen, und zwar einmal im walzharten Zustand H19 (EN 546-2) und einmal im weichen Zustand O (EN 546-2) nach einer Wärmebehandlung bei 280 °C (Nr. 1 - 4) bzw. 260 °C (Nr. 5 - 11) mit einer Haltezeit von 2 h. Die Ergebnisse sind in der Tabelle 2 angegeben.

Wie die Ergebnisse aus der nachfolgenden Tabelle 2 zeigen, wird mit den erfindungsgemäßen Legierungen eine erheblich höhere Bruchdehnung im weichen Zustand O und damit eine bessere Umformbarkeit erreicht als bei den Legierungen aus dem Stand der Technik. Weiterhin haben Versuche gezeigt, dass die erfindungsgemäßen Legierungen zufriedenstellende Korrosionseigenschaften aufweisen und gut prozessierbar sind. Besonders gute Ergebnisse werden mit den Legierungen 9 und 10 erreicht, die ein bevorzugtes Fe:Si-Verhältnis im Bereich von 7 bis 10 aufweisen.

**Tabelle 2**

| | **Zustand H19** | | | | **Zustand O** | | |
|---|---|---|---|---|---|---|---|
| **Legierung** | **Dicke (µm)** | **Rm (MPa)** | **Rp0,2 (MPa)** | **A50/100 (%)** | **Rm (MPa)** | **Rp0,2 (MPa)** | **A50/100 (%)** |
| Nr. 1 | 120 | 186 | 160 | 5,3 | 100 | 50 | 39,1 |
| | 45 | 181 | 146 | 2 | 100 | 45 | 26,5 |
| | 33 | 191 | 153 | 1,8 | 101 | 47 | 20,9 |
| Nr. 2 | 100 | 186 | 155 | 4,9 | 96 | 58 | 41,2 |
| | 55 | 179 | 146 | 3 | 97 | 50 | 30,4 |
| Nr. 3 | 130 | 191 | 154 | 3,9 | 101 | 50 | 36,4 |
| | 70 | 191 | 160 | 3,2 | | | |
| Nr. 4 | 140 | 212 | 163 | 4,4 | 104 | 61 | 38,3 |
| | 80 | 216 | 167 | 2,5 | 105 | 48 | 34,1 |
| Nr. 5 | 70 | 206 | 160 | 2 | 101 | 50 | 31,1 |
| | 35 | 203 | 149 | 4,3 | 101 | 60 | 12 |
| Nr. 6 | 40 | 193 | 142 | 3,7 | 106 | 56 | 29,5 |
| Nr. 7 | 100 | 191 | 142 | 3 | 107 | 61 | 40 |
| | 40 | 180 | 138 | 2,4 | 97 | 42 | 27 |
| Nr. 8 | 80 | 188 | 134 | 4,5 | 95 | 40 | 47 |
| | 40 | 175 | 122 | 4,3 | 96 | 44 | 26 |
| Nr. 9 | 80 | 194 | 141 | 6,8 | 97 | 48 | 45,6 |
| | 45 | 197 | 145 | 4,8 | 97 | 48 | 33 |
| Nr. 10 | 70 | 192 | 143 | 3,5 | 102 | 50 | 38 |
| | 45 | 194 | 144 | 3,2 | 102 | 49 | 28 |
| Nr. 11 | 70 | 194 | 146 | 2,9 | 109 | 53 | 17,6 |
| AA8079-D | 45 | | | | 96 | 42 | 20,8 |
| | 37 | 192 | 154 | 2 | 93 | 43 | 16,8 |
| AA8079-L | 45 | 178 | 145 | 2,3 | 83 | 35 | 17,1 |
| AA1200 | 37 | 158 | 133 | 2,9 | 66 | 36 | 9,4 |
| AA1050A | 45 | | | | 67 | 33 | 9 |

Die zuvor beschriebenen, weichgeglühten Kaltbänder (Zustand O) aus den erfindungsgemäßen Legierungen wurden nach dem Abkühlen auf Raumtemperatur im Coil-Coating-Verfahren beidseitig mit einem PP-Haftlack auf Epoxidharzbasis, d.h. mit einem für die Haftung an Polypropylen (PP) optimierten Haftlack, beschichtet, und zwar mit einer Grammatur (Flächengewicht des Lacks nach dem Trocknen) im Bereich von 6 bis 9 g/m².

Um die Eignung der auf diese Weise hergestellten Aluminiumflachprodukte für die Herstellung von Aluminium-Kunststoff-Verbundbauteilen zu untersuchen, wurden diese jeweils dem im Folgenden beschriebenen Test unterzogen:
Aus den beschichteten Aluminiumbändern wurden Streifen zugeschnitten und gegen 2 mm dicke und 20 mm breite Polypropylen-Streifen (Xenopren® PP TD20, erhältlich von Chemists' Collective XENON, R 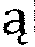 bień, Polen) gesiegelt. Hierzu wurde jeweils ein beschichteter Aluminiumstreifen auf einen der Polypropylen-Streifen gelegt, so dass eine Haftlackschicht des Aluminiumstreifens auf der Seite des Polypropylen-Streifens angeordnet war. Mit einer oberen, auf 200 °C beheizten Siegelbacke von Seiten des Aluminiumstreifens und einer unteren, unbeheizten Siegelbacke von Seiten des Polypropylenstreifens wurden der Aluminiumstreifen und der Polypropylen-Streifen dann für 10 s mit einer Kraft von 460 N miteinander verpresst (versiegelt). Bei den Versuchen wurden Siegelbacken mit einer Breite von 10 mm verwendet, so dass der Aluminiumstreifen mit dem Polypropylen-Streifen über eine 10 mm × 20 mm große Siegelnaht verbunden wurde.

Nach dem Abkühlen wurde die Verbundhaftung des jeweiligen Aluminiumstreifens und Polypropylen-Streifens mit einem Schälversuch geprüft. Zu diesem Zweck wurde der Aluminiumstreifen auf einer Seite der Siegelnaht entlang einer der 20 mm langen Seitenkanten der Siegelnaht um 180° umgebogen, und der Polypropylen-Streifen sowie der umgebogene Teil des Aluminiumstreifens wurden in eine Zugmesseinrichtung eingespannt, mit der die zum Ablösen des Aluminiumstreifens von dem Polypropylen-Streifen erforderliche Kraft (Schälkraft) bestimmt werden konnte. Hierbei wurden Werte von mindestens 90 N, teilweise sogar mindestens 130 N (bei einer Siegelnahtbreite und -länge von 10 mm × 20 mm) gemessen.

Der zuvor beschriebenen Versuche zeigen, dass die erfindungsgemäßen Aluminiumflachprodukte eine sehr gute Haftung an Kunststoff-Elementen zeigen, so dass diese besonders für die Herstellung von Aluminium-Kunststoff-Verbundbauteilen geeignet sind.

## Patentansprüche

1. Verwendung einer Aluminiumlegierung für ein Aluminium-Kunststoff-Verbundbauteil bzw. zu dessen Herstellung,
**dadurch gekennzeichnet,**
**dass** die Aluminiumlegierung folgende Zusammensetzung aufweist:
| | |
|---|---|
| Si: | 0,05 - 0,35 Gew.-%, |
| Fe: | 1,3 - 1,75 Gew.-%, vorzugsweise 1,3 - 1,7 Gew.-%, |
| Cu: | ≤ 0,02 Gew.-%, vorzugweise ≤ 0,01 Gew.-% |
| Mn: | 0,015 - 0,035 Gew.-%, vorzugsweise 0,025 - 0,034 Gew.-%, |
| Mg: | ≤ 0,003 Gew.-%, |
| Cr: | ≤ 0,03 Gew.-%, |
| Ni: | ≤ 0,02 Gew.-%, |
| Zn: | ≤ 0,03 Gew.-%, |
| Ti: | ≤ 0,03 Gew.-%, |
Verunreinigungen einzeln bis 0,05 Gew.-%, in Summe bis 0,15 Gew.-%, Rest Aluminium.

2. Verwendung nach Anspruch 1,
**dadurch gekennzeichnet,**
**dass** die Aluminiumlegierung einen Fe-Gehalt von 1,6 - 1,7 Gew.-% und/oder einen Si-Gehalt von 0,15 - 0,35 Gew.-% aufweist.

3. Verwendung nach Anspruch 1 oder 2,
**dadurch gekennzeichnet,**
**dass** das Verhältnis des Fe-Gehalts zum Si-Gehalt der Aluminiumlegierung zwischen 4 und 10, vorzugsweise zwischen 7 und 10 liegt.

4. Verwendung nach einem der Ansprüche 1 bis 3,
**dadurch gekennzeichnet,**
**dass** das Verhältnis des Fe-Gehalts zum Mn-Gehalt der Aluminiumlegierung zwischen 40 und 80, vorzugsweise zwischen 50 und 60 liegt.

5. Verwendung eines Aluminiumflachprodukts aus einer Legierung entsprechend einem der Ansprüche 1 bis 4 für ein Aluminium-Kunststoff-Verbundbauteil bzw. zu dessen Herstellung.

6. Verwendung nach Anspruch 5,
**dadurch gekennzeichnet,**
**dass** es sich bei dem Aluminiumflachprodukt um ein Aluminiumband, um eine Aluminiumfolie oder um ein Aluminiumblech handelt.

7. Verwendung nach Anspruch 5 oder 6,
**dadurch gekennzeichnet,**
**dass** das Aluminiumflachprodukt eine Dicke im Bereich von 0,02 mm bis 0,7 mm, vorzugsweise im Bereich von 0,020 mm bis 0,200 mm aufweist.

8. Verwendung nach einem der Ansprüche 5 bis 7,
**dadurch gekennzeichnet,**
**dass** das Aluminiumflachprodukt folgende mechanische Eigenschaften aufweist, gemessen im weichen Zustand O nach EN 546-2:
| | |
|---|---|
| Zugfestigkeit Rm: | > 95 MPa, vorzugsweise > 100 MPa, |
| Dehngrenze Rp0,2: | > 45 MPa und |
| Bruchdehnung A100: | > 25% bei einer Dicke des Probenkörpers von 45 µm und/oder |
| | > 30%, vorzugsweise > 35%, bei einer Dicke des Probenkörpers von 100 µm. |

9. Verwendung nach einem der Ansprüche 5 bis 8,
**dadurch gekennzeichnet,**
**dass** das Aluminiumflachprodukt eine Dehngrenze Rp0,2 zwischen 45 und 90 MPa aufweist.

10. Verwendung nach einem der Ansprüche 5 bis 9,
**dadurch gekennzeichnet,**
**dass** das Aluminiumflachprodukt ein- oder beidseitig mit einer Haftlackschicht beschichtet ist, vorzugsweise mit einem PP-Haftlack auf Epoxidharzbasis.

11. Verwendung nach Anspruch 10,
**dadurch gekennzeichnet,**
**dass** die Haftlackschicht eine Dicke im Bereich 3 - 30 µm, vorzugsweise 5 - 10 µm und/oder eine Grammatur im Bereich 3 bis 30 g/m², bevorzugt 5 - 10 g/m², weiter bevorzugt 6 - 9 g/m² aufweist.

12. Verwendung nach einem der Ansprüche 1 bis 11,
**dadurch gekennzeichnet,**
**dass** es sich bei dem Aluminium-Kunststoff-Verbundbauteil um ein mehrschichtiges Verbundbauteil mit mindestens einer Aluminiumlage und mindestens einer Kunststoff-haltigen Lage, insbesondere einer PP-haltigen Lage, handelt.

13. Verwendung nach Anspruch 12,
**dadurch gekennzeichnet,**
**dass** mindestens eine Kunststoff-haltige Lage des Aluminium-Kunststoff-Verbundbauteils eine Faser-haltige Lage ist.

14. Verwendung nach Anspruch 12 oder 13,
**dadurch gekennzeichnet,**
**dass** das Aluminium-Kunststoff-Verbundbauteil mindestens eine innenliegende Aluminiumlage aufweist.

15. Aluminiumlegierung, insbesondere für ein Aluminium-Kunststoff-Verbundbauteil bzw. zu dessen Herstellung, wobei die Aluminiumlegierung folgende Zusammensetzung aufweist:
| | |
|---|---|
| Si: | 0,05 - 0,35 Gew.-%, |
| Fe: | 1,3 - 1,75 Gew.-%, vorzugsweise 1,3 - 1,7 Gew.-%, |
| Cu: | ≤ 0,02 Gew.-%, vorzugsweise ≤ 0,01 Gew.-%, |
| Mn: | 0,015 - 0,035 Gew.-%, vorzugsweise 0,025 - 0,034 Gew.-%, |
| Mg: | ≤ 0,003 Gew.-%, |
| Cr: | ≤ 0,03 Gew.-%, |
| Ni: | ≤ 0,02 Gew.-%, |
| Zn: | ≤ 0,03 Gew.-%, |
| Ti: | ≤ 0,03 Gew.-%, |
Verunreinigungen einzeln bis 0,05 Gew.-%, in Summe bis 0,15 Gew.-%, Rest Aluminium.

## Claims

1. Use of an aluminum alloy for an aluminum-plastic composite component or for the production thereof,
**characterized in that**
the aluminum alloy has the following composition:
| | |
|---|---|
| Si: | 0.05 - 0.35 wt %, |
| Fe: | 1.3 - 1.75 wt %, preferably 1.3 - 1.7 wt %, |
| Cu: | ≤ 0.02 wt %, preferably ≤ 0.01 wt %, |
| Mn: | 0.015 - 0.035 wt %, preferably 0.025 - 0.034 wt %, |
| Mg: | ≤ 0.003 wt %, |
| Cr: | ≤ 0.03 wt %, |
| Ni: | ≤ 0.02 wt %, |
| Zn: | ≤ 0.03wt %, |
| Ti: | ≤ 0.03wt %, |
impurities individually up to 0.05 wt %, in sum up to 0.15 wt %, remainder aluminum.

2. Use according to claim 1,
**characterized in that**
the aluminum alloy has an Fe-content of 1.6 - 1.7 wt% and/or a Si-content of 0.15 - 0.35 wt %.

3. Use according to claim 1 or 2,
**characterized in that**
the ratio of the Fe-content to the Si-content of the aluminum alloy is between 4 and 10, preferably between 7 and 10.

4. Use according to any one of the claims 1 to 3,
**characterized in that**
the ratio of the Fe-content to the Mn-content of the aluminum alloy is between 40 and 80, preferably between 50 and 60.

5. Use of an aluminum flat product made of an alloy according to any one of the claims 1 to 4 for an aluminum-plastic composite component or for the production thereof.

6. Use according to claim 5,
**characterized in that**
the aluminum flat product is an aluminum strip, an aluminum foil or an aluminum sheet.

7. Use according to claim 5 or 6,
**characterized in that**
the aluminum flat product has a thickness in the interval from 0.02 mm to 0.7 mm, preferably in the interval from 0.020 mm to 0.200 mm.

8. Use according to any one of the claims 5 to 7,
**characterized in that**
the aluminum flat product has the following mechanical properties, measured in the annealed state 0 according to EN 546-2:
| | |
|---|---|
| tensile strength Rm: | > 95 MPa, preferably > 100 MPa, |
| yield strength Rp0.2: | > 45 MPa, and |
| elongation at break A100: | > 25 % for a thickness of the sample body of 45 µm and/or |
| | > 30 %, preferably > 35 %, for a thickness of the sample body of 100 µm. |

9. Use according to any one of the claims 5 to 8,
**characterized in that**
the aluminum flat product has a yield strength Rp0.2 between 45 and 90 MPa.

10. Use according to any one of the claims 5 to 9,
**characterized in that**
the aluminum flat product is coated on one or both sides with an adhesive lacquer layer, preferably with a PP-adhesive lacquer based on epoxy resin.

11. Use according claim 10,
**characterized in that**
the adhesive lacquer layer has a thickness in the interval 3 - 30 µm, preferably 5 - 10 µm and/or a grammage in the interval 3 to 30 g/m², preferred 5 - 10 g/m², further preferred 6 - 9 g/m².

12. Use according to any one of the claims 1 to 11,
**characterized in that**
the aluminum-plastic composite component is a multilayer composite component with at least one aluminum layer and at least one layer containing plastic, in particular a layer containing PP.

13. Use according claim 12,
**characterized in that**
at least one layer containing plastic of the aluminum-plastic composite component is a layer containing fibers.

14. Use according claim 12 or 13,
**characterized in that**
the aluminum-plastic composite component has at least one interior aluminum layer.

15. Aluminum alloy, in particular for an aluminum-plastic composite component or for the production thereof, wherein the aluminum alloy has the following composition:
| | |
|---|---|
| Si : | 0.05 - 0.35 wt %, |
| Fe: | 1.3 - 1.75 wt %, preferably 1.3 - 1.7 wt %, |
| Cu: | ≤ 0.02 wt %, preferably ≤ 0.01 wt %, |
| Mn: | 0.015 - 0.035 wt %, preferably 0.025 - 0.034 wt %, |
| Mg: | 0.003 wt %, |
| Cr: | ≤ 0.03 wt %, |
| Ni: | ≤ 0.02 wt %, |
| Zn: | ≤ 0.03wt%, |
| Ti: | ≤ 0.03wt %, |
impurities individually up to 0.05 wt %, in sum up to 0.15 wt %, remainder aluminum.

## Revendications

1. Utilisation d'un alliage pour une pièce composite aluminium-plastique ou sa fabrication,
**caractérisée en ce que**
l'alliage d'aluminium présente la composition suivante :
| | |
|---|---|
| Si: | 0,05 - 0,35 % poids, |
| Fe: | 1,3 - 1,75 % poids, de préférence 1,3 - 1,7 % poids, |
| Cu: | 0,02 % poids, de préférence ≤ 0,01 % poids, |
| Mn: | 0,015 - 0,035 % poids, de préférence 0,025 - 0,034 % poids, |
| Mg : | ≤ 0,003 % poids, |
| Cr: | ≤ 0,03 % poids, |
| Ni: | ≤ 0,02 % poids, |
| Zn: | ≤ 0,03% poids, |
| Ti: | ≤ 0,03% poids, |
impuretés individuellement jusqu'à 0,05 % poids, cumulées jusqu'à 0,15 % poids le reste d'aluminium.

2. Utilisation selon la revendication 1,
**caractérisée en ce que**
l'alliage d'aluminium présente une part de Fe de 1,6 - 1,7 % poids et /ou une part de Si de 0,15 - 0,35 % poids.

3. Utilisation selon les revendications 1 ou 2,
**caractérisée en ce que**
le ratio de la part de Fe à la part de Si de l'alliage d'aluminium est compris entre 4 et 10, de préférence entre 7 et 10.

4. Utilisation selon l'une des revendications 1 à 3,
**caractérisée en ce que**
le ratio de la part de Fe à la part de Mn de l'alliage d'aluminium est compris entre 40 et 80, de préférence entre 50 et 60.

5. Utilisation d'un produit plat d'aluminium en alliage correspondant à l'une des revendications 1 à 4 pour une pièce composite aluminium-plastique ou sa fabrication.

6. Utilisation selon la revendication 5,
**caractérisée en ce que**,
concernant le produit plat d'aluminium, il s'agit d'une bande d'aluminium, d'un film d'aluminium ou d'une tôle d'aluminium.

7. Utilisation selon les revendications 5 ou 6,
**caractérisée en ce que**
le produit plat d'aluminium présente une épaisseur dans l'intervalle de 0,02 mm à 0,7 mm, de préférence dans l'intervalle de 0,020 mm à 0,200 mm.

8. Utilisation selon l'une des revendications 5 à 7,
**caractérisée en ce que**
le produit plat d'aluminium présente les caractéristiques mécaniques suivantes, mesurées dans l'état recuit 0 selon EN 546-2 :
| | |
|---|---|
| résistance à la traction Rm : | > 95 MPa, de préférence > 100 MPa, |
| limite d'élasticité Rp0,2 : | > 45 MPa et |
| allongement à la rupture A100 : | > 25 % pour une épaisseur du corps d'échantillon de 45 µm et /ou |
| | > 30 %, de préférence > 35 %, pour une épaisseur du corps d'échantillon de 100 µm. |

9. Utilisation selon l'une des revendications 5 à 8,
**caractérisée en ce que**
le produit plat d'aluminium présente une limite d'élasticité Rp0,2 entre 45 et 90 MPa.

10. Utilisation selon l'une des revendications 5 à 9,
**caractérisée en ce que**
le produit plat d'aluminium est revêtu d'un ou des deux côtés avec une couche de laque adhésive, de préférence avec une laque adhésive PP à base de résine époxy.

11. Utilisation selon la revendication 10,
**caractérisée en ce que**
la couche de laque adhésive présente une épaisseur dans l'intervalle 3 - 30 µm, de préférence 5 - 10 µm et/ou un grammage dans l'intervalle de 3 à 30 g/m², préférablement 5 -10 g/m², plus préférablement 6 - 9 g/m².

12. Utilisation selon l'une des revendications 1 à 11,
**caractérisée en ce que**,
concernant la pièce composite aluminium-plastique, il s'agit d'une pièce composite multicouche avec au moins une couche d'aluminium et au moins une couche contenant du plastique, en particulier une couche comprenant du PP.

13. Utilisation selon la revendication 12,
**caractérisée en ce qu'**
au moins une couche contenant du plastique de la pièce composite aluminium-plastique est une couche contenant des fibres.

14. Utilisation selon les revendication 12 ou 13,
**caractérisée en ce que**
la pièce composite aluminium-plastique présente au moins une couche d'aluminium située à l'intérieur.

15. Alliage d'aluminium, en particulier pour une pièce composite aluminium-plastique ou sa fabrication, où l'alliage d'aluminium présente la composition suivante :
| | |
|---|---|
| Si: | 0,05 - 0,35 % poids, |
| Fe: | 1,3 - 1,75 % poids, de préférence 1,3 -1,7 % poids, |
| Cu: | ≤ 0,02 % poids, de préférence ≤ 0,01 % poids, |
| Mn: | 0,015 - 0,035 % poids, de préférence 0,025 - 0,034 % poids, |
| Mg : | ≤ 0,003 % poids, |
| Cr: | ≤ 0,03 % poids, |
| Ni: | ≤ 0,02 % poids, |
| Zn: | ≤ 0,03% poids, |
| Ti: | ≤ 0,03% poids, |
impuretés individuellement jusqu'à 0,05 % poids, cumulées jusqu'à 0,15 % poids le reste d'aluminium.
